(19) Europäisches Patentamt
European Patent Office
Office européen des brevets

(11) **EP 4 174 874 B1**

(12) **EUROPEAN PATENT SPECIFICATION**

(45) Date of publication and mention
of the grant of the patent:
**10.07.2024  Bulletin 2024/28**

(21) Application number: **22173438.7**

(22) Date of filing: **16.05.2022**

(51) International Patent Classification (IPC):
**G21B 1/13** (2006.01)   **G21D 3/00** (2006.01)
**G06F 17/10** (2006.01)   **G06F 30/20** (2020.01)
**G06F 111/06** (2020.01)

(52) Cooperative Patent Classification (CPC):
**G21B 1/13; G21D 3/001;** G06F 30/20;
G06F 2111/06; G06N 5/01; G06N 7/01; Y02E 30/10

(54) **COMPUTER-IMPLEMENTED METHOD FOR OPTIMIZING GLOBAL TRITIUM BREEDING RATIO OF A TRITIUM BREEDING BLANKET IN A FUSION REACTOR**

COMPUTER-IMPLEMENTIERTES VERFAHREN ZUR OPTIMIERUNG DES GLOBALEN TRITIUMBRUTVERHÄLTNISSES EINES FUSIONSREAKTORMANTELS IN EINEM FUSIONSREAKTOR

PROCÉDÉ MISE EN OEUVRE PAR ORDINATEUR POUR OPTIMISER LE TAUX GLOBAL DE GÉNÉRATION DE TRITIUM D'UNE COUVERTURE DE REPRODUCTION DU TRITIUM DANS UN RÉACTEUR À FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.10.2021   CN 202111265136**

(43) Date of publication of application:
**03.05.2023   Bulletin 2023/18**

(73) Proprietor: **Southwestern Institute of Physics**
Chengdu, Sichuan 610213 (CN)

(72) Inventors:
• **QU, Shen**
Chengdu, Sichuan, 610225 (CN)
• **CAO, Qixiang**
Chengdu, Sichuan, 610225 (CN)
• **WANG, Xueren**
San Diego, CA, 92127 (US)
• **DUAN, Xuru**
Chengdu, Sichuan, 610225 (CN)
• **WANG, Xiaoyu**
Chengdu, Sichuan, 610225 (CN)

(74) Representative: **Sun, Yiming**
**HUASUN Patent- und Rechtsanwälte**
**Friedrichstraße 33**
**80801 München (DE)**

(56) References cited:
**CN-A- 111 950 177**

• **QU SHEN ET AL: "Study on Multiphysics Coupling and Automatic Neutronic Optimization for Solid Tritium Breeding Blanket of Fusion Reactor", ENERGIES, vol. 14, no. 17, 1 September 2021 (2021-09-01), pages 5442, XP055963725, DOI: 10.3390/en14175442**
• **JOLODOSKY ALEJANDRA ET AL: "Exact perturbation theory for fusion blanket design", ANNALS OF NUCLEAR ENERGY, vol. 131, 1 September 2019 (2019-09-01), GB, pages 353 - 366, XP055963745, ISSN: 0306-4549, DOI: 10.1016/j.anucene.2019.03.039**

**Description**

**Field**

The present invention relates to the neutronics field of tritium breeding blankets of fusion reactors, in particular to a computer-implemented method for optimizing global tritium breeding ratio of a tritium breeding blanket in a fusion reactor.

**Background**

Fusion energy is a permanent source of energy for mankind in the future. With the advantages of abundant resources, economy, cleanness and compatibility with the environment, nuclear fusion energy is recognized as an ideal substitute for conventional energy sources on a large scale. After more than 60 years of research, the magnetically confined controlled nuclear fusion led by Tokamak has made significant breakthroughs in theoretical and physical tests.

In a fusion reactor, the tritium breeding blanket, one of the most important components, is key to realize the tritium self-sufficiency and the thermoelectric conversion. The tritium breeding blanket is located between the plasma and the vacuum vessel, directly facing the high-temperature plasma; 80% of the energy from the deuterium-tritium fusion reaction is released in the form of neutron kinetic energy; penetrating through various materials of the blanket (plasma facing components, structural materials, tritium breeder, neutron multiplier, coolant, neutron absorption moderator, or the like), neutrons are scattered and absorbed, and finally the functions of energy deposition and tritium breeding are realized in the blanket. The tritium breeding blanket is mainly used to:

> 1) breed tritium needed for fusion reaction in the blanket through the nuclear reaction between fusion neutrons and tritium breeder;

> 2) deposit the energy entering the blanket by means of fusion neutrons and thermal radiation, and remove the energy by the cooling system and convert to electricity; and

> 3) shield fusion neutrons and gamma rays, and ensure the safety of components outside the blanket such as vacuum vessel, magnet system and other auxiliary systems for heating, diagnosis system and the safety of operators.

The tritium breeding is the most basic function of a tritium breeding blanket of a fusion reactor, and the tritium breeding ratio is a key parameter to evaluate whether the tritium breeding blanket can produce enough tritium to achieve the tritium self-sufficiency for the fusion reactor, which indicates a ratio of tritium atoms produced in the tritium breeding blanket to tritium atoms consumed by deuterium-tritium reaction.

The article entitled "Study on Multiphysics Coupling and Automatic Neutronic Optimization for Solid Tritium Breeding Blanket of Fusion Reactor" and published by Qu Shen et al., Energies 14, No. 17 (2021) 5442, pertains to breeding of tritium in a fusion reactor blanket.

Document CN 111 950 177 A relates to fusion reactor tritium production blanket neutronics, in particular to a multi-physical field coupling neutronics automatic optimization method of solid tritium production cladding, the method comprising the following steps: step 1, partitioning a solid tritium production cladding; listing a one-dimensional convection boundary heat conduction differential equation containing an internal heat source; solving one-dimensional temperature distribution of each area by adopting a finite difference method; step 2, obtaining homogenization density of each proliferation area according to the thickness of each proliferation area; step 3, screening out the scheme with the maximum TBR under the thermal condition to serve as the initial geometric scheme of the next optimization step; and step 4, repeating the process of the step 3 for multiple iterations until convergence, and screening out a TBR maximum scheme meeting the thermal condition, so as to realize neutronics automatic optimization of the fusion reactor solid tritium production blanket under multi-physical coupling.

The article entitled "Exact Perturbation Theory for Fusion Blanket Design" and published by A. Jolodosky et al., Annals of Nuclear Energy 131 (2019) 353, pertains to breeding of tritium in a fusion reactor blanket.

However, the tritium breeding ratio of the fusion reactor will be impacted by a number of factors, including the geometries (the opening ports to install the corresponding heating and diagnostic equipment, and a heterogeneous model of the blanket), materials (type, density, and enrichment), nuclear libraries (uncertainty) and neutron transport codes(uncertainty). Meanwhile, the tritium losses occur during the fuel cycle because of the tritium decay, leakage, extraction, and retention which is a considerable challenge to the tritium self-sufficiency. Therefore, a higher tritium breeding ratio is needed. Taking the above facts into account, the tritium breeding ratio design goal of a fusion reactor is set as 1.15.

At present, the tritium breeding ratio is mostly optimized by a two-step method of "local to global", that is, the local tritium breeding ratio of each typical blanket module of the fusion reactor is optimized firstly, and then the optimized typical module is checked in the fusion reactor neutronics model. The existing optimization method of local tritium breeding ratio has following problems:

1) Based on an optimization idea of "local to global", current neutronics optimization codes for tritium breeding blankets require loading a 14.1 MeV Gaussian distribution neutron source in front of the first wall of a typical blanket module, with reflection boundaries in the toroidal and poloidal directions. This is quite different from the neutron radiation field of a specific module in the fusion reactor. The calculated neutron flux distribution and power distribution are quite different. Therefore, there is a big error in the analysis and optimization of local modules.

2) Strong neutron interference exists between blanket modules in the toroidal and poloidal directions. After an optimized specific blanket module is put into the fusion reactor neutronics model, its local tritium breeding ratio promotion rate will not increase but decrease, and the local tritium breeding ratios of other modules are affected. Therefore, it is not the global optimal blankets scheme by putting each local optimized module into the global neutronics model.

3) To reduce the amount of calculation and improve the optimization efficiency, current codes are designed to avoid repeated neutronics transport calculation. Usually, the local tritium breeding ratio of each scheme is obtained by building a tritium breeding ratio library and predicted by numerical methods such as fitting, interpolation, extrapolation or artificial neural networks. This greatly depends on the size and accuracy of the library. The variation of tritium breeding ratio depends on the spatial distribution of neutron flux and energy spectrum, therefore the tritium breeding ratio obtained by numerical method or by prediction has a large deviation (usually 1 %-5%) from the results of three-dimension neutronics transport calculation, which is difficult to meet the requirements of high precision and resolution of tritium breeding ratio calculation results.

4) Most of the existing numerical codes are designed based on greedy algorithms. In each step of optimization, only the scheme that is better than the previous step in neutronics performance (with a higher local tritium breeding ratio) is accepted. Therefore, most of the optimization schemes are local optimal solutions, and it is impossible to find the global optimal blankets scheme, indicating that the optimization ability is insufficient. Moreover, the algorithm greatly depends on the selection of the initial scheme, also known as primary scheme, and the optimization step length, easily resulting in the oscillation between two local optimal schemes and the inability to converge in the multi-dimension optimization problem.

5) Most of the neutronics transport calculations are based on Monto Carlo codes. In case of small optimization step size, the increase of tritium breeding ratio calculated by two transport calculations is easily influenced by the statistical fluctuation of Monto Carlo codes. To obtain sufficient calculation accuracy, the number of simulated particles is usually increased, which greatly reduces the optimization efficiency.

## Summary

The present invention provides a computer-implemented method to improve the efficiency, on the premise of satisfying the engineering feasibility and thermal design limit. Different from the two-step method of "local to global" in the prior art, the one-step optimization method for the global tritium breeding ratio of tritium breeding blanket of the fusion reactor is studied in the present invention by utilizing limited computing resources, which is of great scientific significance and engineering value to find the better global optimization scheme rapidly on the premise of satisfying the thermal design limits and engineering feasibilities.

The present invention can help to quickly find the global optimal blankets scheme of the fusion reactor with the highest global tritium breeding ratio by automatically adjusting the internal layout scheme, material types (including breeding materials and structural materials), material parameters (including density, enrichment and nuclide abundance) and geometric parameters (position and size of function regions) of each tritium breeding blanket module.

The present invention is realized by the following technical solution:

The present invention provides a computer-implemented method for optimizing the global tritium breeding ratio for a tritium breeding blanket in a fusion reactor as defined in claim 1 attached.

Preferred embodiments of the invention are defined in claims dependent upon claim 1 attached.

Compared with the current methods or codes or devices, the present invention has the following advantages and advantageous effects:

1. The present invention can greatly improve the optimization effect and efficiency of the global tritium breeding ratio, and effectively avoid the problem of strong neutron interference among blanket modules in the traditional two-step optimization method of "local to global", making the global tritium breeding ratio optimization possible with high-efficiency, high-fidelity and high-resolution.

2. By adopting the neutronics perturbation calculations rather than multiple neutronics transport calculations, the present invention overcomes the defect that the neutronics optimization of the tritium breeding blanket by transport calculation is overshadowed by the statistical fluctuation of Monto Carlo code, greatly reduces the calculation amount and improves the efficiency.

3. Aiming at the three-dimension neutronics model on a fusion reactor with helium-cooled solid tritium breeding blankets, the present invention is able to realize the rapid optimization of the global tritium breeding ratio by automatically adjusting the internal geometric parameters, material parameters and configuration of each blanket module. This can also provide reference for the design and optimization of helium-cooled solid tritium blanket of a fusion reactor.

**Brief Description of the Drawings**

The drawings illustrated herein are intended to provide a further understanding of embodiments of the present invention, which constitute a part of the present invention but not a limitation to the embodiments of the present invention. In the drawings:

Fig. 1 is a flow chart of the method for optimizing the global tritium breeding ratio of fusion reactor blankets according to the present invention.
Fig. 2 is a detailed flow chart of the method for optimizing the global tritium breeding ratio of fusion reactor blankets according to an embodiment of the present invention.
Fig. 3 is a three-dimension CAD model of CFETR typical helium-cooled solid breeder tritium breeding blankets according to the present invention.
Fig. 4 is a structural diagram of a device for optimizing the global tritium breeding ratio of fusion reactor blankets implementing the present invention.

Reference number and corresponding components:
1. cap; 2. lithium silicate pebble bed; 3. beryllium pebble bed; 4. first wall; 5. manifold; 6. shielding block; 7. splitter plate; 8. cooling plate.

**Detailed Description of the Preferred Embodiments**

To make the purpose, technical solution and advantages of the present invention more clearly, the present invention will be further described in detail below with reference to embodiments and drawings. The illustrative embodiments of the present invention and their descriptions are only intended to explain the present invention, but not to limit the present invention, which is defined by the claims.

Embodiment 1

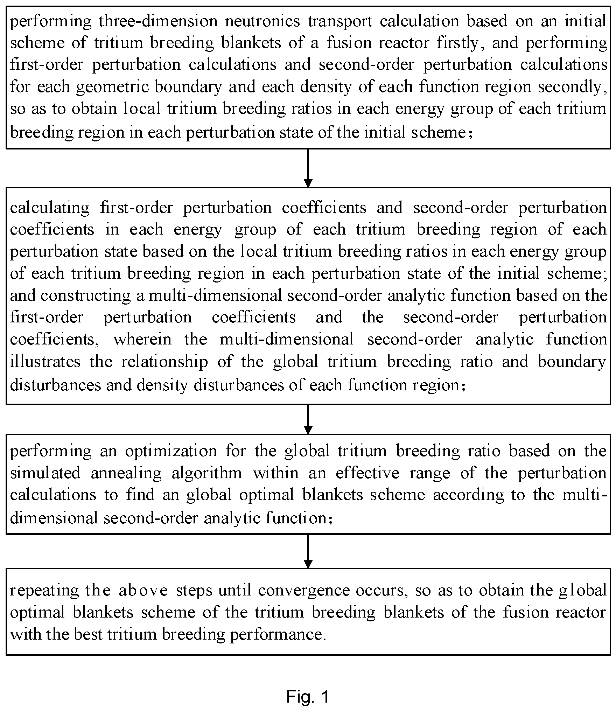

As shown in Fig. 1, the present invention provides a method for optimizing the global tritium breeding ratio of a tritium breeding blanket in a fusion reactor. Based on the current Monte Carlo neutronics transport code, the neutronics perturbation calculation and the simulated annealing algorithm are adopted in the present invention to perform the global tritium breeding ratio optimization of a fusion reactor and to achieve intelligent acceleration of the calculation method. The method for optimizing the global tritium breeding ratio includes the following steps:

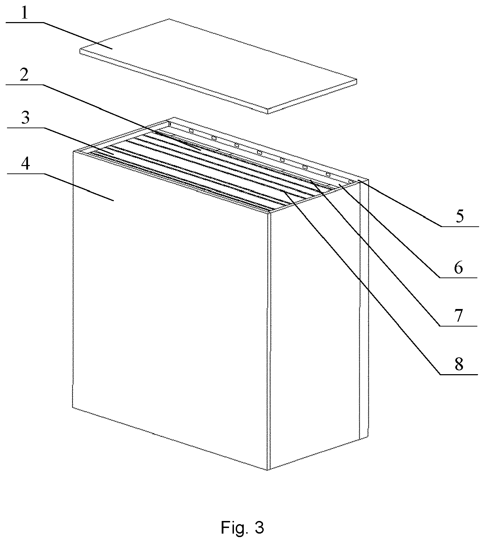

S1 numbering material variables and geometric variables of all the tritium breeding blankets of the fusion reactor, including density of each function region and each position of geometric boundary; performing three-dimension neutronics transport calculation according to the initial scheme of all tritium breeding blankets of the fusion reactor, and performing the first-order perturbation calculations and the second-order perturbation calculations for each geometric boundary and each density of each function region secondly, so as to obtain local tritium breeding ratios in each energy group of each tritium breeding region in each perturbation state of the initial scheme; and the initial scheme model is shown in Fig. 3 which is a typical module of CFETR helium-cooled ceramic breeder tritium breeding blankets without optimization; Fig. 3 is the three-dimension CAD model of a typical module of CFETR helium-cooled ceramic breeder tritium breeding blanket, which includes a cap 1, a lithium silicate pebble bed 2, a beryllium pebble bed 3, a first wall 4, a manifold 5, a shielding block 6, a splitter plate 7 and a cooling plate 8; the present invention can be used for different solid tritium breeding blanket models, and is not limited to the model shown in Fig. 3;

S2, Calculating the first-order and the second-order perturbation coefficients in each energy group of each tritium breeding region of each perturbation state based on the local tritium breeding ratios; and constructing a multi-dimensional second-order analytic function based on the first-order perturbation coefficients and the second-order perturbation coefficients, wherein the multi-dimensional second-order analytic function illustrates the relationship of the global tritium breeding ratio and the boundary disturbances and the density disturbances of each function region;

S3: performing an optimization for the global tritium breeding ratio based on the simulated annealing algorithm within an effective range of the first-order perturbation calculations and the second-order perturbation calculations to find the global optimal blankets scheme according to the multi-dimensional second-order analytic function; the variables in the global optimal blankets scheme include geometric boundary disturbance and each density disturbance of each function region and the global tritium breeding ratio, and

S4: repeating steps S1 to S3, and repeatedly iterating until convergence occurs, so as to rapidly obtain the global optimal blankets scheme with the best tritium breeding performance of tritium breeding blankets of the fusion reactor.

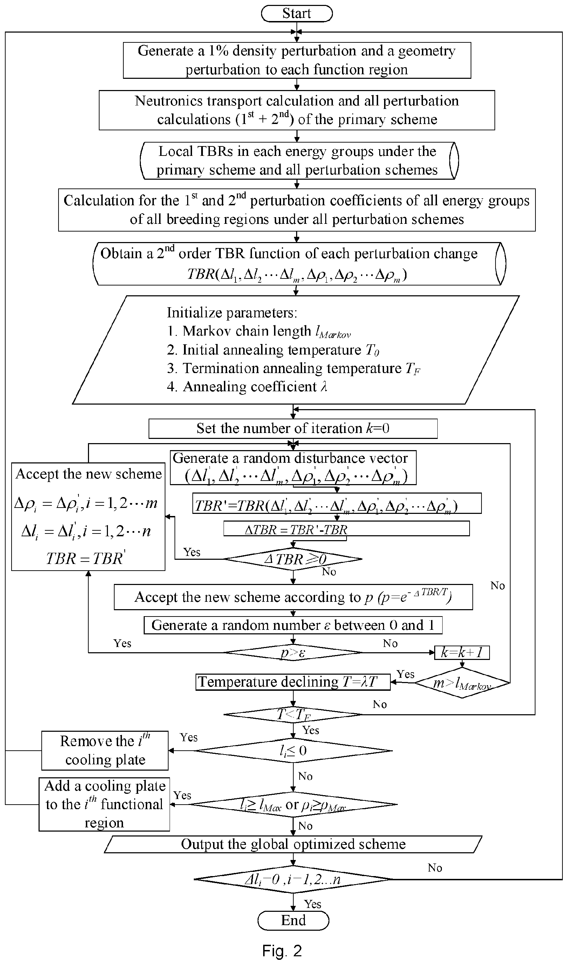

As shown in Fig. 2, the specific implementation step is as follows:

S1: numbering material variables and geometric variables of all the tritium breeding blankets of the fusion reactor, including density of each function region and each position of geometric boundary; performing three-dimension neutronics transport calculation according to the initial scheme of all tritium breeding blankets of the fusion reactor, and performing the first-order and the second-order perturbation calculations under each state of 1% geometric boundary perturbation and 1% density perturbation, so as to obtain the local tritium breeding ratios in each energy group under each perturbation state based on the initial scheme; as shown in Formulas (1) to (5):

$$^{0}TBR = \sum_{i=1}^{n}\sum_{j=1}^{g} {}^{0}TBR_{i,j}$$

Formula (1)

$$^{1}TBR_{k}^{geo} = \sum_{i=1}^{n}\sum_{j=1}^{g} {}^{1}TBR_{i,j,k}^{geo}$$

Formula (2)

$$^{2}TBR_{k}^{geo} = \sum_{i=1}^{n}\sum_{j=1}^{g} {}^{2}TBR_{i,j,k}^{geo}$$

Formula (3)

$$^{1}TBR_{k}^{den} = \sum_{i=1}^{n}\sum_{j=1}^{g} {}^{1}TBR_{i,j,k}^{den}$$

Formula (4)

$$^{2}TBR_{k}^{den} = \sum_{i=1}^{n}\sum_{j=1}^{g} {}^{2}TBR_{i,j,k}^{den}$$

Formula (5)

where, $^{0}TBR$ is the global TBR based on the initial scheme; $^{0}TBR_{i,j}$ is the local TBR of the $j^{th}$ energy group of the $i^{th}$

tritium breeding region based on the initial scheme; ${}^{1}TBR_{k}^{geo}$ is the local TBR with the $k^{th}$ function region under the first-order geometric perturbation; ${}^{1}TBR_{i,j,k}^{geo}$ is the local TBR of the $j^{th}$ energy group of the $i^{th}$ tritium breeding region with the $k^{th}$ function region under the first-order geometric perturbation; ${}^{2}TBR_{k}^{geo}$ is the local TBR with the $k^{th}$ function region under the second-order geometric perturbation; ${}^{2}TBR_{i,j,k}^{geo}$ is the local TBR of the $j^{th}$ energy group of the $i^{th}$ tritium breeding region under the $k^{th}$ function region under the second-order geometric perturbation; ${}^{1}TBR_{k}^{den}$ is the local TBR with the $k^{th}$ function region under the first-order density perturbation; ${}^{1}TBR_{i,j,k}^{den}$ is the local TBR of the $j^{th}$ energy group of the $i^{th}$ tritium breeding region under the $k^{th}$ function region under the first-order density perturbation; ${}^{2}TBR_{k}^{den}$ is the local TBR with the $k^{th}$ function region under the second-order density perturbation; ${}^{2}TBR_{i,j,k}^{den}$ is the local TBR of the $j^{th}$ energy group of the $i^{th}$ tritium breeding region with the $k^{th}$ function region under the second-order density perturbation; $n$ is the total number of the tritium breeding regions; and g is the number of the energy groups.

In the present invention, TBR refers to the tritium breeding ratio;

S2: Calculating the first-order and the second-order perturbation coefficients, as shown in Formula (6) - Formula (9), in each energy group of each tritium breeding region of each perturbation state based on the local tritium breeding ratios; and constructing a multi-dimensional second-order analytic function based on the first-order perturbation coefficients and the second-order perturbation coefficients, wherein the multi-dimensional second-order analytic function illustrates the relationship of the global tritium breeding ratio and the boundary disturbances and the density disturbances of each function region;

$$\alpha_{i,j,k}^{geo} = \frac{{}^{1}TBR_{i,j,k}^{geo} - {}^{0}TBR_{i,j}}{\Delta l} \qquad \text{Formula (6)}$$

$$\beta_{i,j,k}^{geo} = \frac{{}^{2}TBR_{i,j,k}^{geo} - {}^{1}TBR_{i,j,k}^{geo}}{\Delta l^2} \qquad \text{Formula (7)}$$

$$\alpha_{i,j,k}^{den} = \frac{{}^{1}TBR_{i,j,k}^{den} - {}^{0}TBR_{i,j}}{\Delta \rho} \qquad \text{Formula (8)}$$

$$\beta_{i,j,k}^{den} = \frac{{}^{2}TBR_{i,j,k}^{den} - {}^{1}TBR_{i,j,k}^{den}}{\Delta \rho^2} \qquad \text{Formula (9)}$$

where, $\alpha_{i,j,k}^{geo}$ is the first-order perturbation coefficient of the $j^{th}$ energy group of the $i^{th}$ tritium breeding region with the $k^{th}$ function region under geometric disturbance; $\beta_{i,j,k}^{geo}$ is the second-order perturbation coefficient of the $j^{th}$ energy group of the $i^{th}$ tritium breeding region with the $k^{th}$ function region under geometric disturbance; $\alpha_{i,j,k}^{den}$ is the first-order perturbation coefficient of the $j^{th}$ energy group of the $i^{th}$ tritium breeding region with the $k^{th}$ function region under density

disturbance; $\beta_{i,j,k}^{den}$ is the second-order perturbation coefficient of the $j^{th}$ energy group of the $i^{th}$ tritium breeding region with the $k^{th}$ function region under density disturbance; $\Delta l$ is the geometric boundary perturbation of the function regions; and $\Delta\rho$ is the material density perturbation of the function regions;

Based on the first-order and the second-order perturbation coefficients, the multi-dimension second-order analytic function of the global TBR with the boundary disturbance and density disturbance of each function region can be derived as shown in Formula (10):

$$TBR(\Delta l_1, \Delta l_2 \cdots \Delta l_m, \Delta\rho_1, \Delta\rho_2 \cdots \Delta\rho_m) = {}^0TBR + \sum_{i=1}^{n}\sum_{j=1}^{g}\sum_{k=1}^{m}(\alpha_{i,j,k}^{geo}\Delta l_k + \beta_{i,j,k}^{geo}\Delta l_k^2)$$

$$+ \sum_{i=1}^{n}\sum_{j=1}^{g}\sum_{k=1}^{m}(\alpha_{i,j,k}^{den}\Delta\rho_k + \beta_{i,j,k}^{den}\Delta\rho_k^2)$$

Formula (10)

where, $\Delta l_k$ is the geometric boundary disturbance of the $k^{th}$ function region; $\Delta\rho_k$ is the density disturbance of the $k^{th}$ function region; and m is the total number of the function regions.

S3: finding the global optimal blankets scheme of the fusion reactor with the best tritium breeding performance in an effective range of the perturbation calculations by using the simulated annealing algorithm according to the multi-dimension second-order analytic function; the variables in the global optimal blankets scheme include each geometric boundary disturbance and each density disturbance of each function region and the global tritium breeding ratio, which specifically includes the following sub-steps:

sub-step A. initializing parameters: the initial annealing temperature $T_0$, the final annealing temperature $T_F$, the annealing temperature $T = T_0$, the Markov chain length $l_{Markov}$ and the annealing coefficient $\lambda$;

sub-step B: generating random disturbances to the geometric boundary disturbance and the density disturbance of each function region respectively, as shown in Formula (11) and Formula (12):

$$\Delta l_k^{'} = \Delta l_k + \Delta l_k^{ran} \qquad\qquad \text{Formula (11)}$$

$$\Delta\rho_k^{'} = \Delta\rho_k + \Delta\rho_k^{ran} \qquad\qquad \text{Formula (12)}$$

where, $\Delta l_k^{'}$ is the geometric boundary disturbance of the $k^{th}$ function region after random disturbance; $\Delta l_k^{ran}$ is the random perturbation of the geometric boundary of the $k^{th}$ function region; $\Delta\rho_k^{'}$ is the density disturbance of the $k^{th}$ function region after random disturbance; and $\Delta\rho_k^{ran}$ is the random disturbance of the density of the $k^{th}$ function region; and

based on Formulas (11) and (12), putting $\Delta l_k^{'}$ and $\Delta\rho_k^{'}$ into Formulas (10) to obtain the global TBR of the fusion reactor under random disturbance in blankets.

sub-step C: calculating the global tritium breeding ratio increasement $\Delta$TBR of after random disturbance according Formula (13):

$$\Delta TBR = TBR(\Delta l_1^{'}, \Delta l_2^{'} \cdots \Delta l_m^{'}, \Delta \rho_1^{'}, \Delta \rho_2^{'} \cdots \Delta \rho_m^{'})$$
$$-TBR(\Delta l_1, \Delta l_2 \cdots \Delta l_m, \Delta \rho_1, \Delta \rho_2 \cdots \Delta \rho_m) \qquad \text{Formula (13)}$$

where, $\Delta TBR$ is the global tritium breeding ratio increasement, which illustrates the increasement of the global TBR of the fusion reactor after random disturbance in blankets; and

giving a judgment according to the $\Delta TBR$: if $\Delta TBR?0$, accepting the current disturbance, and setting all the variables (the geometric boundary disturbance, the density disturbance and the global TBR) as the starting point of the next step, sub-step B, of disturbance, as shown in Formula (14) - Formula (16):

$$\Delta l_i = \Delta l_i^{'}, i = 1, 2 \cdots m \qquad \text{Formula (14)}$$

$$\Delta \rho_i = \Delta \rho_i^{'}, i = 1, 2 \cdots m \qquad \text{Formula (15)}$$

$$TBR(\Delta l_1, \Delta l_2 \cdots \Delta l_m, \Delta \rho_1, \Delta \rho_2 \cdots \Delta \rho_m)$$
$$= TBR(\Delta l_1^{'}, \Delta l_2^{'} \cdots \Delta l_m^{'}, \Delta \rho_1^{'}, \Delta \rho_2^{'} \cdots \Delta \rho_m^{'}) \qquad \text{Formula (16)}$$

if $\Delta TBR<0$, accepting the current disturbance according to the probability $e^{-\Delta TBR/T}$; otherwise, rejecting the current disturbance and all variables keeping unchanged for the next disturbance step.

sub-step D. looping sub-steps B and C until the total number of times of rejecting reaches to $l_{Markov}$, and then performing cooling operation, as shown in Formula (17):

$$T = \lambda T \qquad \text{Formula (17)}$$

sub-step E. looping the sub-step D until $T<T_F$, and then determining the global optimal blankets scheme of the geometric boundary disturbance of each function region within an effective range of the perturbation calculations; wherein the global optimal blankets scheme is determined as follows:

e1. if there is a function region in the global optimal blankets scheme with a thickness less than or equal to 0, removing the cooling plate adjacent to this function region and returning to the sub-step A;

e2. if there is a function region in the global optimal blankets scheme with a thickness greater than or equal to the maximum thickness or with a density greater than or equal to the maximum density on the basis of the engineering feasibility, inserting a cooling plate in this function region and returning to the sub-step A; if e1 and e2 are not satisfied, taking the current optimized scheme as the global optimal blankets scheme, and outputting the global optimal blankets scheme.

S4: repeating the above steps S1-S3, and repeatedly iterating until convergence occurs, so as to rapidly obtain the global optimal blankets scheme with the best tritium breeding performance of tritium breeding blankets of the fusion reactor.

The present invention provides a method for optimizing the global tritium breeding ratio of fusion reactor blankets. Different from the traditional two-step optimization method of "local to global", the one-step optimization method of the global tritium breeding ratio of a fusion reactor is studied in the present invention. The present invention can greatly improve the optimization effect and efficiency of the global tritium breeding ratio, and effectively avoid the problem of strong neutron interference among the blanket modules, making the global tritium breeding ratio optimization possible with high-efficiency, high-fidelity and high-resolution. By adopting the neutronics perturbation calculations rather than multiple neutronics transport calculations, the present invention overcomes the defect that the neutronics optimization of the tritium breeding blanket by transport calculation is overshadowed by the statistical fluctuation of Monto Carlo code, greatly reduces the calculation amount and improves the efficiency. Aiming at the three-dimension neutronics model on a fusion reactor with helium-cooled solid tritium breeding blankets, the present invention is able to realize the rapid optimization of the global tritium breeding ratio by automatically adjusting the internal geometric parameters, material parameters and configuration of each blanket module. This can also provide reference for the design and optimization of helium-cooled solid tritium blanket of a fusion reactor.

The present invention can help to quickly find the global optimal blankets scheme of a fusion reactor with the best tritium breeding performance by automatically adjusting the internal layout scheme, material types (including breeding materials and structural materials), material parameters (including density, enrichment and nuclide abundance) and geometric parameters (position and size of function regions) of the tritium breeding blanket, which is of great scientific significance and engineering value.

Embodiment 2

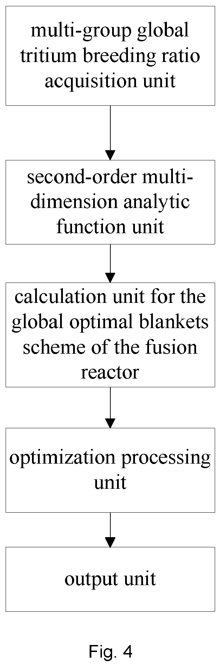

As shown in Fig. 4, the difference between this embodiment and Embodiment 1 is that the present invention further provides a device for optimizing the global tritium breeding ratio of a tritium breeding blanket in a fusion reactor. The device allows for the method for optimizing the global tritium breeding ratio of fusion reactor blankets described in Embodiment 1 and includes:

an multi-group local tritium breeding ratio acquisition unit, which is used for performing the three-dimension neutronics transport calculation based on the initial scheme of tritium breeding blankets of the fusion reactor, and performing the first-order perturbation calculations and the second-order perturbation calculations for each geometric boundary and each density of each function region, so as to obtain the local tritium breeding ratios in each energy group of each tritium breeding region in each perturbation state of the initial scheme; wherein the initial scheme is shown in Fig. 3;

a second-order multi-dimension analytic function unit, which is used for calculating the first-order perturbation coefficients and the second-order perturbation coefficients based on the local tritium breeding ratios in each energy group of each perturbation state; and constructing a multi-dimensional second-order analytic function based on the first-order perturbation coefficient and the second-order perturbation coefficient, wherein the multi-dimensional second-order analytic function illustrates the relationship of the global tritium breeding ratio and the boundary disturbance and the density disturbance of each function region; ;

a calculation unit for the global optimal blankets scheme of the fusion reactor, which is used for finding the global optimal blankets scheme of the fusion reactor in the effective range of the perturbation calculations by using the simulated annealing algorithm according to the multi-dimensional second-order analytic function of the global tritium breeding ratio;

an optimization processing unit, which is used for repeating the execution processes of the multi-group local tritium breeding ratio acquisition unit, the second-order multi-dimension analytic function unit and the calculation unit for the global optimal blankets scheme of the fusion reactor, and repeatedly iterating until convergence occurs, so as to obtain the global optimal blankets scheme with the best tritium breeding performance; and

an output unit, which is used for outputting the global optimal blankets scheme with the best tritium breeding performance.

In this embodiment, the multi-dimension second-order analytic function constructed by the multi-dimension second-order analytic function unit is as follows:

$$TBR(\Delta l_1, \Delta l_2 \cdots \Delta l_m, \Delta \rho_1, \Delta \rho_2 \cdots \Delta \rho_m) = {}^0TBR + \sum_{i=1}^{n} \sum_{j=1}^{g} \sum_{k=1}^{m} (\alpha_{i,j,k}^{geo} \Delta l_k + \beta_{i,j,k}^{geo} \Delta l_k^2)$$

$$+ \sum_{i=1}^{n} \sum_{j=1}^{g} \sum_{k=1}^{m} (\alpha_{i,j,k}^{den} \Delta \rho_k + \beta_{i,j,k}^{den} \Delta \rho_k^2)$$

Formula (10)

where, $\Delta l_k$ is the geometrical boundary disturbance of the $k^{th}$ function region; $\Delta \rho_k$ is the density disturbance of the $k^{th}$ function region; $m$ is the total number of the function regions; $n$ is the total number of the tritium breeding regions; $g$ is the number of the energy groups; $^{0}TBR$ is the global tritium breeding ratio of the fusion reactor based on the initial blanket scheme; $\alpha_{i,j,k}^{geo}$ is the first-order perturbation coefficient of the $j^{th}$ energy group of the $i^{th}$ tritium breeding region in the $k^{th}$ function region with a geometric disturbance; $\beta_{i,j,k}^{geo}$ is the second-order perturbation coefficient of the $j^{th}$ energy group of the $i^{th}$ tritium breeding region in the $k^{th}$ function region with a geometric disturbance; $\alpha_{i,j,k}^{den}$ is the first-order perturbation coefficient of the $j^{th}$ energy group of the $i^{th}$ tritium breeding region in the $k^{th}$ function region with a density disturbance; and $\beta_{i,j,k}^{den}$ is the second-order perturbation coefficient of the $j^{th}$ energy group of the $i^{th}$ tritium breeding region in the $k^{th}$ function region with a density disturbance.

In this embodiment, the calculation unit for the global optimal blankets scheme of the fusion reactor includes an initialization subunit, a disturbance generating subunit, a calculation subunit, a first circulation unit and a second circulation unit; wherein

the initialization subunit is used for initializing parameters: the initial annealing temperature $T_0$ , the final annealing temperature $T_F$, the annealing temperature $T = T_0$, the Markov chain length $l_{Markov}$ and the annealing coefficient $\lambda$ ;

the disturbance generating subunit is used for generating random disturbances to the geometric boundary disturbance and the density disturbance of each function region respectively;

the calculation subunit is used for calculating the global TBR increasement ΔTBR of the fusion reactor after random disturbance, and giving a judgment according to the $\Delta TBR$: if $\Delta TBR \geq 0$, accepting the current disturbance, and setting all the variables as the starting point of the next step of disturbance, wherein the variables includes the geometric boundary disturbance, the density disturbance and the global TBR; if $\Delta TBR < 0$, accepting the current disturbance according to the probability $e^{-\Delta TBR/T}$; otherwise, rejecting the current disturbance and all variables keeping unchanged for the next step;

the first circulation unit is used for looping the processes executed by the disturbance generating subunit and the calculation subunit until the total number of times of the rejecting reaches to $l_{Markov}$, and then performing cooling operation;

the second circulation unit is used for looping the processes executed by the first circulation until $T < T_F$, and then determining the global optimal blankets scheme of the geometric boundary disturbance of each function region within an effective range of the perturbation calculations; wherein the global optimal blankets scheme is determined as follows:
e1. if there is a function region in the global optimal blankets scheme with a thickness less than or equal to 0, removing the cooling plate adjacent to this function region and returning to a process of initializing parameters by the initialization subunit; e2. if there is a function region in the global optimal blankets scheme with a thickness greater than or equal to the maximum thickness or with a density greater than or equal to the maximum density on the basis of the engineering feasibility, inserting a cooling plate in this function region and returning to the process of initializing parameters by the initialization subunit; if e1 and e2 are not satisfied, taking the optimized scheme as the global optimal blankets scheme, and outputting the global optimal blankets scheme.

In this embodiment, the formula used in the calculation subunit to calculate the global tritium breeding ratio increasement ΔTBR after random disturbances is:

$$\Delta TBR = TBR(\Delta l_1', \Delta l_2' \cdots \Delta l_m', \Delta \rho_1', \Delta \rho_2' \cdots \Delta \rho_m')$$
$$-TBR(\Delta l_1, \Delta l_2 \cdots \Delta l_m, \Delta \rho_1, \Delta \rho_2 \cdots \Delta \rho_m) \quad \text{Formula (13)}$$

where, $\Delta TBR$ is the increasement of the global tritium breeding ratio of the fusion reactor after random disturbances; $\Delta l_m'$ is the geometric boundary disturbance of the $m^{th}$ function region after random disturbance; $\Delta \rho_m'$ is the density disturbance of the $m^{th}$ function region after random disturbance; $\Delta l_m$ is the geometric boundary disturbance of the $m^{th}$ function region before random disturbance; and $\Delta \rho_m$ is the density disturbance of the $m^{th}$ function region before random disturbance.

In this embodiment, the variables in the global optimal blankets scheme obtained by the calculation subunit include each geometric boundary disturbance and each density disturbance of each function region and the global tritium breeding ratio.

In this embodiment, 1% geometric disturbance and 1% density disturbance are considered in the first-order and the second order perturbation calculations by the multi-group local tritium breeding ratio acquisition unit.

Different from the traditional two-step optimization method of "local to global" in the prior art, the one-step optimization method for the global tritium breeding ratio of tritium breeding blankets of the fusion reactor is studied in the present invention by utilizing limited computing resources, which is of great scientific significance and engineering value to find the better global optimization scheme rapidly on the premise of satisfying the thermal design limits and engineering feasibilities.

The present invention may be embodied in the form of an entirely hardware embodiment, an entirely software embodiment, or an embodiment combining software and hardware.

The present invention is described with reference to flowcharts and/or block diagrams of a method, a device (system), and a computer program product according to embodiments or implementations of the present invention. It should be understood that each flow and/or block in a flowchart and/or block diagram, and combinations of flows and/or blocks in the flowchart and/or block diagram may be implemented by computer program instructions. These computer program instructions may be provided to a processor of a general-purpose computer, a special purpose computer, an embedded processor or other programmable data processing devices to produce a machine, so that the instructions executed by the processor of the computer or other programmable data processing devices produce means for implementing the functions specified in one or a plurality of flows in a flowchart and/or one or a plurality of blocks in a block diagram.

These computer program instructions may also be stored in a computer-readable memory that can direct a computer or other programmable data processing devices to operate in a specific manner, so that the instructions stored in the computer-readable memory can produce an article of manufacture, including instruction means for implementing the functions specified in one or a plurality of flows in a flowchart and/or one or a plurality of blocks in a block diagram.

These computer program instructions may also be loaded onto a computer or other programmable data processing devices, so that a series of operational steps are executed on the computer or other programmable devices to produce a computer-implemented process; therefore, the instructions executed on the computer or other programmable devices provide steps for implementing the functions specified in one or a plurality of flows in a flowchart and/or one or a plurality of blocks in a block diagram.

**Claims**

1. A computer-implemented method for optimizing global tritium breeding ratio of a tritium breeding blanket in a fusion reactor, comprising following steps:

   S1. performing three-dimension neutronics transport calculation based on an initial scheme of the tritium breeding blanket of the fusion reactor firstly, and performing first-order perturbation calculations and second-order perturbation calculations for each geometric boundary and each density of each function region secondly, so as to obtain local tritium breeding ratios in each energy group of each tritium breeding region in each perturbation state of the initial scheme;

   S2. calculating first-order perturbation coefficients and second-order perturbation coefficients in each energy group of each tritium breeding region of each perturbation state based on the local tritium breeding ratios in each energy group of each tritium breeding region in each perturbation state of the initial scheme; and constructing a multi-dimensional second-order analytic function based on the first-order perturbation coefficients and the second-order perturbation coefficients, wherein the multi-dimensional second-order analytic function illustrates the relationship of the global tritium breeding ratio and boundary disturbances and density disturbances of each function region;

   S3. performing an optimization for the global tritium breeding ratio based on the simulated annealing algorithm within an effective range of the perturbation calculations to find a global optimal blankets scheme according to the multi-dimensional second-order analytic function;

   S4. repeating steps S1 to S3 until convergence occurs, so as to obtain the global optimal blankets scheme of the tritium breeding blankets of the fusion reactor with the best tritium breeding performance; and implementing the global optimal blankets scheme in the tritium breeding blankets of the fusion reactor.

2. The method of claim 1, wherein the multi-dimensional second-order analytic function of the global tritium breeding ratio is as follows:

$$TBR(\Delta l_1, \Delta l_2 \cdots \Delta l_m, \Delta\rho_1, \Delta\rho_2 \cdots \Delta\rho_m) = {}^0TBR + \sum_{i=1}^{n}\sum_{j=1}^{g}\sum_{k=1}^{m}(\alpha_{i,j,k}^{geo}\Delta l_k + \beta_{i,j,k}^{geo}\Delta l_k^2)$$

$$+ \sum_{i=1}^{n}\sum_{j=1}^{g}\sum_{k=1}^{m}(\alpha_{i,j,k}^{den}\Delta\rho_k + \beta_{i,j,k}^{den}\Delta\rho_k^2)$$

where, $\Delta l_k$ is a geometric boundary disturbance of the $k$th function region; $\Delta\rho_k$ is a density disturbance of the $k$th function region; $m$ is the total number of the function regions; $n$ is the total number of the tritium breeding regions; $g$ is the number of the energy groups; $^0TBR$ is a global tritium breeding ratio of the fusion reactor based on the initial scheme; $\alpha_{i,j,k}^{geo}$ is the first-order perturbation coefficient of the $j$th energy group of the $i$th tritium breeding region in the $k$th function region with a geometric disturbance; $\beta_{i,j,k}^{geo}$ is the second-order perturbation coefficient of the $j$th energy group of the $i$th tritium breeding region in the $k$th function region with a geometric disturbance; $\alpha_{i,j,k}^{den}$ is the first-order perturbation coefficient of the $j$th energy group of the $i$th tritium breeding region in the $k$th function region with a density disturbance; and $\beta_{i,j,k}^{den}$ is the second-order perturbation coefficient of the $j$th energy group of the $i$th tritium breeding region in the $k$th function region with a density disturbance.

3. The method of claim 1, step s3 comprises following sub-steps:

sub-step A. initializing parameters: an initial annealing temperature $T_0$, an final annealing temperature $T_F$, an annealing temperature $T = T_0$, an Markov chain length $l_{Markov}$ and an annealing coefficient $\lambda$ ;
sub-step B. generating random disturbances to the geometric boundary disturbance and the density disturbance of each function region respectively;
sub-step C. calculating a global tritium breeding ratio increasement $\Delta$TBR of the fusion reactor after random disturbances, and giving a judgment according to the $\Delta TBR$: if $\Delta TBR \geq 0$, accepting the current disturbance, and setting all variables as the starting point of the next step of disturbance, wherein the variables comprises the geometric boundary disturbance, the density disturbance and the global tritium breeding ratio; if $\Delta TBR < 0$, accepting the current disturbance according to the probability $e^{-\Delta TBR/T}$; otherwise, rejecting the current disturbance and all variables keeping unchanged for the next disturbance step;
sub-step D. looping sub-steps B and C until the total number of times of rejecting reaches to $l_{Markov}$, and then performing cooling operation; and
sub-step E. looping the sub-step D until $T < T_F$, and then determining the global optimal blankets scheme of the geometric boundary disturbance of each function region within an effective range of the perturbation calculations; wherein the global optimal blankets scheme is determined as follows:

e1. if there is a function region in the global optimal blankets scheme with a thickness less than or equal to 0, removing a cooling plate adjacent to the function region with a thickness less than or equal to 0 and returning to the sub-step A;
e2. if there is a function region in the global optimal blankets scheme with a thickness greater than or equal to the maximum thickness or with a density greater than or equal to the maximum density on the basis of the engineering feasibility, inserting a cooling plate in this function region and returning to the sub-step A; if e1 and e2 are not satisfied, taking current optimized scheme as the global optimal blankets scheme, and outputting the global optimal blankets scheme.

4. The method of claim 3, wherein the formula for calculating the global tritium breeding ratio increasement $\Delta TBR$ in the sub-step C is:

$$\Delta TBR = TBR(\Delta l_1', \Delta l_2' \cdots \Delta l_m', \Delta \rho_1', \Delta \rho_2' \cdots \Delta \rho_m')$$
$$-TBR(\Delta l_1, \Delta l_2 \cdots \Delta l_m, \Delta \rho_1, \Delta \rho_2 \cdots \Delta \rho_m)$$

wherein, $\Delta TBR$ is the global tritium breeding ratio increasement of the fusion reactor after random disturbances; $\Delta l_m'$ is the geometric boundary disturbance of the $m^{th}$ function region after random disturbance; $\Delta \rho_m'$ is the density disturbance of the $m^{th}$ function region after random disturbance; $\Delta l_m$ is the geometric boundary disturbance of the $m^{th}$ function region before random disturbance; and $\Delta \rho_m$ is the density disturbance of the $m^{th}$ function region before random disturbance.

5. The method of claim 1, wherein variables in the global optimal blankets scheme comprise each optimal geometric boundary disturbance and each optimal density disturbance of each function region and the global tritium breeding ratio.

6. The method of claim 1, wherein 1% geometric disturbance and 1% density disturbance are considered in the first-order perturbation calculation and the second order perturbation calculation.

**Patentansprüche**

1. Computerimplementiertes Verfahren zum Optimieren eines globalen Tritium-Brutverhältnisses eines Tritium-Brutblankets in einem Fusionsreaktor, umfassend die folgenden Schritte:

S1. erstens Durchführen einer dreidimensionalen Neutronentransportberechnung auf der Grundlage eines Anfangsschemas des Tritium-Brutblankets des Fusionsreaktors, und zweitens Durchführen von Störungsberechnungen erster Ordnung und Störungsberechnungen zweiter Ordnung für jede geometrische Grenze und jede Dichte jedes Funktionsbereichs, um lokale Tritium-Brutverhältnisse in jeder Energiegruppe jeder Tritium-Brutregion in jedem Störungszustand des Anfangsschemas zu erlangen,
S2. Berechnen von Störungskoeffizienten erster Ordnung und Störungskoeffizienten zweiter Ordnung in jeder Energiegruppe jeder Tritium-Brutregion jedes Störungszustands auf der Grundlage der lokalen Tritium-Brutverhältnisse in jeder Energiegruppe jeder Tritium-Brutregion in jedem Störungszustand des Anfangsschemas, und Konstruieren einer mehrdimensionalen analytischen Funktion zweiter Ordnung auf der Grundlage der Störungskoeffizienten erster Ordnung und der Störungskoeffizienten zweiter Ordnung, wobei die mehrdimensionale analytische Funktion zweiter Ordnung die Beziehung des globalen Tritium-Brutverhältnisses und der Grenzstörungen und Dichtestörungen jedes Funktionsbereichs veranschaulicht,
S3. Durchführen einer Optimierung für das globale Tritium-Brutverhältnis auf der Grundlage des simulierten Temperalgorithmus innerhalb eines effektiven Bereichs der Störungsberechnungen, um ein globales optimales Blanket-Schema gemäß der mehrdimensionalen Analysefunktion zweiter Ordnung zu finden,
S4. Wiederholen der Schritte S1 bis S3, bis Konvergenz auftritt, um das globale optimale Blanket-Schema der Tritium-Brutblankets des Fusionsreaktors mit der besten Tritium-Brutleistung zu erlangen, und
Implementieren des globalen optimalen Blanket-Schemas in den Tritium-Brutblankets des Fusionsreaktors.

2. Verfahren aus Anspruch 1, wobei die mehrdimensionale analytische Funktion zweiter Ordnung des globalen Tritium-Brutverhältnisses wie folgt lautet:

$$TBR(\Delta l_1, \Delta l_2 \cdots \Delta l_m, \Delta \rho_1, \Delta \rho_2 \cdots \Delta \rho_m) = {}^0TBR + \sum_{i=1}^{n} \sum_{j=1}^{g} \sum_{k=1}^{m} (\alpha_{i,j,k}^{geo} \Delta l_k + \beta_{i,j,k}^{geo} \Delta l_k^2)$$

$$+ \sum_{i=1}^{n} \sum_{j=1}^{g} \sum_{k=1}^{m} (\alpha_{i,j,k}^{den} \Delta \rho_k + \beta_{i,j,k}^{den} \Delta \rho_k^2)$$

wobei $\Delta l_k$ eine geometrische Grenzstörung des k-ten Funktionsbereichs ist, $\Delta \rho_k$ eine Dichtestörung des $k$-ten Funktionsbereichs ist, *m* die Gesamtzahl der Funktionsbereiche ist, *n* die Gesamtzahl der Tritium-Brutregionen ist, *g* die Anzahl der Energiegruppen ist, °*TBR* ein globales Tritium-Brutverhältnis des Fusionsreaktors auf der Grundlage des Anfangsschemas ist, $\alpha_{i,j,k}^{geo}$ der Störungskoeffizient erster Ordnung der *j*-ten Energiegruppe der *i*-ten Tritium-Brutregion im *k*-ten Funktionsbereich mit einer geometrischen Störung ist, $\beta_{i,j,k}^{geo}$ der Störungskoeffizient zweiter Ordnung *der j*-ten Energiegruppe der i-ten Tritium-Brutregion im *k*-ten Funktionsbereich mit einer geometrischen Störung ist, $\alpha_{i,j,k}^{den}$ der Störungskoeffizient erster Ordnung der *j*-ten Energiegruppe der *i*-ten Tritium-Brutregion im *k*-ten Funktionsbereich mit einer Dichtestörung ist, und $\beta_{i,j,k}^{den}$ der Störungskoeffizient zweiter Ordnung der *j*-ten Energiegruppe der i-ten Tritium-Brutregion im *k*-ten Funktionsbereich mit einer Dichtestörung ist.

3. Verfahren nach Anspruch 1, wobei Schritt S3 die folgenden Unterschritte umfasst:

   Unterschritt A. Initialisierung von Parametern: einer Temperanfangstemperatur $T_0$, einer Temperendtemperatur $T_F$, einer Tempertemperatur $T = T_0$, einer Markov-KettenLänge $l_{Markov}$ und einem Temperkoeffizienten $\lambda$,
   Unterschritt B. Generieren von jeweils zufälligen Störungen der geometrischen Grenzstörung und der Dichtestörung jedes Funktionsbereichs,
   Unterschritt C. Berechnen eines Anstiegs des globalen Tritium-Brutverhältnisses ΔTBR des Fusionsreaktors nach zufälligen Störungen, und Abgeben einer Beurteilung gemäß dem *ΔTBR:* wenn *ΔTBR?0,* Akzeptieren der aktuellen Störung, und Einstellen aller Variablen als Startpunkt des nächsten Störungsschritts, wobei die Variablen die geometrische Grenzstörung, die Dichtestörung und das globale Tritium-Brutverhältnis umfassen, wenn ΔTBR<0, Akzeptieren der aktuellen Störung gemäß der Wahrscheinlichkeit $e^{-\Delta TBR/T}$, sonst Ablehnen der aktuellen Störung und Behalten aller Variablen für den nächsten Störungsschritt unverändert,
   Unterschritt D. Ausführen einer Schleife der Unterschritte B und C, bis die Gesamtzahl der Ablehnungen $l_{Markov}$ erreicht, und anschließendes Durchführen eines Kühlvorgangs, und
   Unterschritt E. Ausführen einer Schleife des Unterschritts D bis $T < T_F$, und anschließendes Bestimmen des globalen optimalen Blanket-Schemas der geometrischen Grenzstörung jedes Funktionsbereichs innerhalb eines effektiven Bereichs der Störungsberechnungen, wobei das globale optimale Blanket-Schema wie folgt bestimmt wird:

   e1. wenn im globalen optimalen Blanket-Schema ein Funktionsbereich mit einer Dicke kleiner oder gleich 0 vorhanden ist, Entfernen einer Kühlplatte, die an den Funktionsbereich mit einer Dicke kleiner oder gleich 0 angrenzt, und Zurückkehren zum Unterschritt A,
   e2. wenn im globalen optimalen Blanket-Schema ein Funktionsbereich mit einer Dicke, die größer oder gleich der maximalen Dicke ist, oder mit einer Dichte, die größer oder gleich der maximalen Dichte ist, vorhanden ist, auf der Grundlage der technischen Machbarkeit, Einfügen einer Kühlplatte in diesen Funktionsbereich und Zurückkehren zum Unterschritt A, wenn e1 und e2 nicht erfüllt sind, Übernehmen des aktuellen optimierten Schemas als das globale optimale Blanket-Schema, und Ausgeben des globalen optimalen Blanket-Schemas.

4. Verfahren nach Anspruch 3, wobei die Formel zum Berechnen des Anstiegs des globalen Tritium-Brutverhältnisses *ΔTBR* im Unterschritt C lautet:

$$\Delta TBR = TBR(\Delta l_1', \Delta l_2' \ldots \Delta l_m', \Delta\rho_1', \Delta\rho_2' \ldots \Delta\rho_m') - TBR(\Delta l_1, \Delta l_2 \ldots \Delta l_m, \Delta\rho_1, \Delta\rho_2 \ldots \Delta\rho_m)$$

wobei *ΔTBR* der Anstieg des globalen Tritium-Brutverhältnisses des Fusionsreaktors nach zufälligen Störungen ist, $\Delta l_m'$ die geometrische Grenzstörung des *m*-ten Funktionsbereichs nach zufälliger Störung ist, $\Delta\rho_m'$ die Dichtestörung des *m*-ten Funktionsbereichs nach zufälliger Störung ist, $\Delta l_m$ die geometrische Grenzstörung des *m*-ten Funktionsbereichs vor zufälliger Störung ist, und $\Delta\rho_m$ die Dichtestörung des m-ten Funktionsbereichs vor zufälliger Störung ist.

5. Verfahren nach Anspruch 1, wobei Variablen im globalen optimalen Blanket-Schema jede optimale geometrische Grenzstörung und jede optimale Dichtestörung jedes Funktionsbereichs und das globale Tritium-Brutverhältnis umfassen.

6. Verfahren nach Anspruch 1, wobei eine geometrische Störung von 1 % und eine Dichtestörung von 1 % bei der Störungsberechnung erster Ordnung und der Störungsberechnung zweiter Ordnung berücksichtigt werden.

**Revendications**

1. Procédé mis en oeuvre par ordinateur pour optimiser un taux de production de tritium global d'une couverture tritigène dans un réacteur à fusion, comprenant les étapes suivantes :

S1. premièrement, la réalisation d'un calcul de transport neutronique tridimensionnel sur la base d'un schéma initial de la couverture tritigène du réacteur à fusion et, deuxièmement, la réalisation de calculs de perturbation de premier ordre et de calculs de perturbation de second ordre pour chaque limite géométrique et chaque densité de chaque région de fonction, de manière à obtenir des taux de production de tritium locaux dans chaque groupe d'énergie de chaque région tritigène dans chaque état de perturbation du schéma initial ;
S2. le calcul de coefficients de perturbation de premier ordre et de coefficients de perturbation de second ordre dans chaque groupe d'énergie de chaque région tritigène de chaque état de perturbation sur la base des taux de production de tritium locaux dans chaque groupe d'énergie de chaque région tritigène dans chaque état de perturbation du schéma initial ; et la construction d'une fonction analytique de second ordre multidimensionnelle sur la base des coefficients de perturbation de premier ordre et des coefficients de perturbation de second ordre, dans lequel la fonction analytique de second ordre multidimensionnelle illustre la relation du taux de production de tritium global, des perturbations de limite et des perturbations de densité de chaque région de fonction ;
S3. la réalisation d'une optimisation du taux de production de tritium global sur la base de l'algorithme de recuit simulé à l'intérieur d'une plage efficace des calculs de perturbation pour trouver un schéma de couverture optimale global d'après la fonction analytique de second ordre multidimensionnelle ;
S4. la répétition des étapes S1 à S3 jusqu'à ce qu'une convergence se produise, de manière à obtenir le schéma de couverture optimale global des couvertures tritigènes du réacteur à fusion avec la meilleure performance de production de tritium ; et
la mise en oeuvre du schéma de couverture optimale global dans les couvertures tritigènes du réacteur à fusion.

2. Procédé selon la revendication 1, dans lequel la fonction analytique de second ordre multidimensionnelle du taux de production de tritium global est la suivante :

$$TBR(\Delta l_1, \Delta l_2 \cdots \Delta l_m, \Delta \rho_1, \Delta \rho_2 \cdots \Delta \rho_m) = {}^0TBR + \sum_{i=1}^{n}\sum_{j=1}^{g}\sum_{k=1}^{m}(\alpha_{i,j,k}^{geo}\Delta l_k + \beta_{i,j,k}^{geo}\Delta l_k^2)$$

$$+ \sum_{i=1}^{n}\sum_{j=1}^{g}\sum_{k=1}^{m}(\alpha_{i,j,k}^{den}\Delta \rho_k + \beta_{i,j,k}^{den}\Delta \rho_k^2)$$

où, $\Delta l_k$ est une perturbation de limite géométrique de la k$^{ième}$ région de fonction ; $\Delta \rho_k$ est une perturbation de densité de la k$^{ième}$ région de fonction ; m est le nombre total des régions de fonction ; $n$ est le nombre total des régions de production de tritium ; g est le nombre des groupes d'énergie ; $^0TBR$ est un taux de production de tritium global du réacteur à fusion sur la base du schéma initial ; $\alpha_{i,j,k}^{geo}$ est le coefficient de perturbation de premier ordre du $j^{ième}$ groupe d'énergie de la $i^{ème}$ région tritigène dans la $k^{ième}$ région de fonction avec une perturbation géométrique ; $\beta_{i,j,k}^{geo}$ est le coefficient de perturbation de second ordre du $j^{ième}$ groupe d'énergie de la $i^{ème}$ région tritigène dans la $k^{ième}$ région de fonction avec une perturbation géométrique ; $\alpha_{i,j,k}^{den}$ est le coefficient de perturbation de premier ordre du $j^{iéme}$ groupe d'énergie de la $i^{ème}$ région tritigène dans la $k^{ième}$ région de fonction avec une perturbation de

densité ; et $\beta_{i,j,k}^{den}$ est le coefficient de perturbation de second ordre du $j^{i\text{ème}}$ groupe d'énergie de la $i^{\text{ème}}$ région tritigène dans la $k^{\text{ième}}$ région de fonction avec une perturbation de densité.

3. Procédé selon la revendication 1, dans lequel l'étape s3 comprend les sous-étapes suivantes :

> sous-étape A. l'initialisation de paramètres : une température de recuit initiale $T_0$, une température de recuit finale $T_F$, une température de recuit $T=T_0$, une longueur de chaîne de Markov $I_{Markov}$ et un coefficient de recuit $\lambda$ ;
> sous-étape B. la génération de perturbations aléatoires pour respectivement la perturbation de limite géométrique et la perturbation de densité de chaque région de fonction ;
> sous-étape C. le calcul d'une augmentation de taux de production de tritium global $\Delta TBR$ du réacteur de fusion après des perturbations aléatoires, et l'établissement d'un jugement en fonction du $\Delta TBR$ : si $\Delta TBR \geq 0$, l'acceptation de la perturbation courante, et le réglage de toutes les variables comme point de départ de l'étape suivante de perturbation, dans lequel les variables comprennent la perturbation de limite géométrique, la perturbation de densité et le taux de production de tritium global ; si $\Delta TBR<0$, l'acceptation de la perturbation courante en fonction de la probabilité $e^{-\Delta TBR/T}$ ; sinon, le rejet de la perturbation courante et le maintien de toutes les variables inchangées pour l'étape suivante de perturbation ;
> sous-étape D. la réalisation en boucle des sous-étapes B et C jusqu'à ce que le nombre de rejets atteigne $I_{Markov}$, puis la réalisation d'une opération de refroidissement ; et
> sous-étape E. la réalisation en boucle de la sous-étape D jusqu'à ce que $T<T_F$, puis la détermination du schéma de couverture optimale global de la perturbation de limite géométrique de chaque région de fonction à l'intérieur d'une plage efficace des calculs de perturbation ; dans lequel le schéma de couverture optimale global est déterminé comme suit :
>
>> e1. s'il y a une région de fonction dans le schéma de couverture optimale global avec une épaisseur inférieure ou égale à 0, le retrait d'une plaque de refroidissement adjacente à la région de fonction avec une épaisseur inférieure ou égale à 0 et le retour à la sous-étape A ;
>> e2. s'il y a une région de fonction dans le schéma de couverture optimale global avec une épaisseur supérieure ou égale à l'épaisseur maximale ou avec une densité supérieure ou égale à la densité maximale sur la base de la faisabilité d'ingénierie, l'insertion d'une plaque de refroidissement dans cette région de fonction et le retour à la sous-étape A ; si e1 et e2 ne sont pas satisfaits, la prise d'un schéma optimisé courant en tant que schéma de couverture optimale global, et la délivrance du schéma de couverture optimale global.

4. Procédé selon la revendication 3, dans lequel la formule pour le calcul de l'augmentation de taux de production de tritium global $\Delta TBR$ à la sous-étape C est :

$$\Delta TBR = TBR(\Delta l'_1, \Delta l'_2 \dots \Delta l'_m, \Delta \rho'_1, \Delta \rho'_2 \dots \Delta \rho'_m) - TBR(\Delta l_1, \Delta l_2 \dots \Delta l_m, \Delta \rho_1, \Delta \rho_2 \dots \Delta \rho_m)$$

où, $\Delta TBR$ est l'augmentation de taux de production de tritium global du réacteur à fusion après des perturbations aléatoires ; $\Delta l'_m$ est la perturbation de limite géométrique de la $m^{i\text{ème}}$ région de fonction après une perturbation aléatoire ; $\Delta \rho'_m$ est la perturbation de densité de la $m^{i\text{ème}}$ région de fonction après une perturbation aléatoire ; $\Delta l_m$ est la perturbation de limite géométrique de la $m^{i\text{ème}}$ région de fonction avant une perturbation aléatoire ; et $\Delta \rho_m$ est la perturbation de densité de la $m^{i\text{ème}}$ région de fonction avant une perturbation aléatoire.

5. Procédé selon la revendication 1, dans lequel des variables dans le schéma de couverture optimale global comprennent chaque perturbation de limite géométrique optimale et chaque perturbation de densité optimale de chaque région de fonction et le taux de production de tritium global.

6. Procédé selon la revendication 1, dans lequel une perturbation géométrique de 1 % et une perturbation de densité de 1 % sont prises en compte dans le calcul de perturbation de premier ordre et dans le calcul de perturbation de second ordre.

performing three-dimension neutronics transport calculation based on an initial scheme of tritium breeding blankets of a fusion reactor firstly, and performing first-order perturbation calculations and second-order perturbation calculations for each geometric boundary and each density of each function region secondly, so as to obtain local tritium breeding ratios in each energy group of each tritium breeding region in each perturbation state of the initial scheme;

calculating first-order perturbation coefficients and second-order perturbation coefficients in each energy group of each tritium breeding region of each perturbation state based on the local tritium breeding ratios in each energy group of each tritium breeding region in each perturbation state of the initial scheme; and constructing a multi-dimensional second-order analytic function based on the first-order perturbation coefficients and the second-order perturbation coefficients, wherein the multi-dimensional second-order analytic function illustrates the relationship of the global tritium breeding ratio and boundary disturbances and density disturbances of each function region;

performing an optimization for the global tritium breeding ratio based on the simulated annealing algorithm within an effective range of the perturbation calculations to find an global optimal blankets scheme according to the multi-dimensional second-order analytic function;

repeating the above steps until convergence occurs, so as to obtain the global optimal blankets scheme of the tritium breeding blankets of the fusion reactor with the best tritium breeding performance.

Fig. 1

Fig. 2

Fig. 3

multi-group global tritium breeding ratio acquisition unit

↓

second-order multi-dimension analytic function unit

↓

calculation unit for the global optimal blankets scheme of the fusion reactor

↓

optimization processing unit

↓

output unit

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111950177 A

**Non-patent literature cited in the description**

- **QU SHEN et al.** Study on Multiphysics Coupling and Automatic Neutronic Optimization for Solid Tritium Breeding Blanket of Fusion Reactor. *Energies,* 2021, vol. 14 (17), 5442

- **A. JOLODOSKY et al.** Exact Perturbation Theory for Fusion Blanket Design. *Annals of Nuclear Energy,* 2019, vol. 131, 353